# EUROPÄISCHE PATENTANMELDUNG

(11) **EP 4 691 731 A1**
(43) Veröffentlichungstag der Anmeldung: **11.02.2026**
(21) Anmeldenummer: 25194083.9
(22) Anmeldetag: 05.08.2025
(51) Int. Cl.: B29C 45/67, B29C 45/68

(54) **FORMSCHLIESSEINHEIT, MASCHINE MIT EINER FORMSCHLIESSEINHEIT UND VERFAHREN ZUM BETREIBEN EINER FORMSCHLIESSEINHEIT**

(30) Priorität: 07.08.2024 DE 102024122587
(71) Anmelder: ARBURG GmbH + Co KG, 72290 Loßburg (DE)
(72) Erfinder: BLETSCHER, Rainer, 72270 Baiersbronn (DE)
(74) Vertreter: RPK Patenanwälte Reinhardt und Kaufmann Partnerschaft mbB (Pforzheim)

(57) **Zusammenfassung**

Eine Formschließeinheit (10) für eine Maschine/Spritzgießmaschine (100) und ein Verfahren zu deren Betreiben weisen eine Abstützplatte (20), einen nicht beweglichen Formträger (30), der ein Formteil trägt, einen beweglichen Formträger (40), der ein weiteres Formteil trägt, mindestens eine Hydraulikeinheit (50) und einen Antrieb (60) umfassend einen Motor (62) und ein Getriebe (64) auf, die an der Abstützplatte (20) oder dem beweglichen Formträger (40) angeordnet sind und mit Linearbewegungseinheiten (66) verbunden sind, die zwischen Abstützplatte (20) und beweglichem Formträger (40) angeordnet sind. Die Linearbewegungseinheiten (66) sind mit jeweils einer von mehreren Hydraulikeinheiten (50) verbunden, die mit der Abstützplatte (20) oder dem beweglichen Formträger (40) verbunden sind. Der Antrieb (60) und/oder die Hydraulikeinheit (50) bewegen den beweglichen Formträger (40). Die Hydraulikeinheiten (50) bringen wenigstens einen Druck auf den beweglichen Formträger (40) auf, wenn die Formteile nahezu in Anlage gebracht sind, wobei der Antrieb (60) gleichzeitig durch eine Rückdrehsicherung (68) gesichert ist. Die Linearbewegungseinheiten (66) bringen den nicht beweglichen Formträger (30) und den beweglichen Formträger (40) wahlweise in einen Zustand bringen, in dem die Formteile (35, 45) einen definierten minimalen Abstand zueinander aufweisen oder einen größeren Abstand aufweisen. Die Hydraulikeinheiten (50) sind eingerichtet, den beweglichen Formträger (40), in dem Zustand, in dem die Formteile (35, 45) den definierten minimalen Abstand zueinander aufweisen, mit einem Druck zu beaufschlagen.

## Beschreibung

Die vorliegende Erfindung betrifft eine Formschließeinheit für eine Maschine zur Verarbeitung von Kunststoffen und anderen plastifizierbaren Materialien, insbesondere eine Spritzgießmaschine, mit den Merkmalen des Anspruchs 1, eine Maschine zur Verarbeitung von Kunststoffen und anderen plastifizierbaren Materialien, insbesondere eine Spritzgießmaschine, mit den Merkmalen des Anspruchs 12 und ein Verfahren zum Betreiben einer Formschließeinheit einer Maschine zur Verarbeitung von Kunststoffen und anderen plastifizierbaren Materialien, insbesondere eine Spritzgießmaschine, mit den Merkmalen des Anspruchs 13.

Im Schließkraftbereich bis 200 Tonnen kommen sowohl im elektrischen als auch hybriden Spritzgießmaschinensegment überwiegend 5-Punkt-Kniehebel mit nach innen öffnendem Kniehebelstrang zur Anwendung. Die Kniehebelsysteme werden in der Regel mit vier Strängen ausgeführt, welche zwischen beweglichem Formträger und Abstützträger platziert sind. Die Hauptstränge werden über einen Kreuzkopf mit den Hilfs- bzw. Stellhebeln verbunden und mittels Elektromotor und Spindel horizontal bewegt. Der Einsatz eines 5-Punkt Kniehebelsystems hat einen kinematischen Vorteil. In der hinteren, geöffneten Position erreicht der Antrieb infolge der vorteilhaften Übersetzung hohe Geschwindigkeitsprofile für den beweglichen Werkzeugträger, wohingegen in der vorderen, geschlossenen Position der Werkzeugträger langsam die Werkzeughälften fügt und die erforderliche Schließkraft über das Durchstrecken der Kniehebel werkzeugschonend aufbaut. Der Nachteil dieser Ausführungsvariante liegt in der Vielzahl an erforderlichen Komponenten wie den Haupt- und Hilfshebeln und den zugehörigen Drehgelenken sowie der Formhöhenverstellung zur Anpassung der Werkzeughöhe auf variierende Werkzeughöhen, was erhebliche Kosten verursacht. All diese Komponenten sind hoch belastet, benötigen Schmierungs- und Wartungsaufwand und unterliegen Verschleiß.

Löst man die Werkzeugbewegung hydraulisch, lässt sich jede mögliche Werkzeugposition ohne eine Anpassung mittels Formhöhenverstellung anfahren. Um die gleichen Werkezugeinbaumaße wie bei einer elektrischen Maschine abzudecken, ist aber der hydraulische Hub im Hydraulikzylinder zu vergrößern, was zu einer Vergrößerung der hydraulisch installierten Antriebsleistung sowie zu einem größeren Ölbehälter führt. Die Kompressibilität der dadurch vergrößerten Ölsäule im Hydraulikzylinder führt neben einem erhöhten Energiebedarf auch zu einem positionsungenauen Fahrprofil. Die große, eingespannte Ölsäule neigt beim Entspannen zu einer Stick-Slip-Bewegung, was sich negativ auf die Fahrdynamik auswirkt.

Die DE 195 11 917 A1 offenbart ein Verfahren und eine Formschließeinheit für eine Druckspritzgießmaschine für Kunststoffe, keramische Massen und dergleichen. Die Formschließeinheit hat eine feststehende und eine bewegliche Platte, zwischen denen sich ein mehrteiliger Formschließbereich befindet. Eine erste Einheit fährt und schließt die bewegliche Platte. Eine zweite Einheit übt beim Schließen eine zusätzliche Kraft aus, in dem sie über eine Abstützplatte und die erste Einheit diese Kraft über den Rahmen auf die feststehende Platte überträgt. Dabei wird eine maximal zulässige Kraft für die Bewegung der beweglichen Platte festgelegt. Die erste Einheit übt eine Anpresskraft aus, wenn die Form anliegt, und bewegt die bewegliche Platte von einer Nullposition in eine Anwendungsposition. Ein Sensor misst die Kraft während der Bewegung. Auftragskraft und Kontaktkraft ergeben zusammen die Schließkraft, die von der zweiten Einheit übertragen wird. Bei Überschreitung der maximal zulässigen Schließkraft wird die Schließung der Form unterbrochen.

In der DE 10 2015 109 840 B3 ist eine Kniehebel-Formschließeinheit offenbart, wobei ein mit einem Kniehebelmechanismus in Wirkverbindung stehender Kreuzkopf mit einem elektrischen Antrieb verfahren wird. Diese Lösung weist die oben beschriebenen Nachteile auf.

Die EP 2 242 633 B1 offenbart einen Hybridantrieb mit mitgeschlepptem Zylinder und Hydrospeicherladung während der Stellbewegung zur Erzeugung einer Stellbewegung und zur Aufbringung einer großen Haltekraft, insbesondere zum Bewegen von Formwerkzeugen sowie zum Aufbringen einer Schließkraft hierauf, mit einem Spindeltrieb für die Stellbewegung und mit einer zum Aufbringen der Haltekraft erforderlichen Differentialzylindereinheit mit einer Kolbenstange, einem kolbenstangenseitigen, ringförmigen Druckraum und einem kolbenstangenabseitigen Druckraum. Der Linearantrieb wird in einfacher und kompakter Bauweise ohne die Verwendung eines zusätzlichen Aggregates und durch Einsatz eines Hydrospeichers geräuscharm realisiert.

Aus der EP 0 508 277B1 ist eine Verschiebe- und/oder Stellkraftantriebsvorrichtung für Spritzgießmaschinen bekannt. Diese wird zur Betätigung der Schließeinheit für eine Spritzgießform benutzt. Sie weist eine Hintereinander-, Reihen- oder Serienanordnung eines Hydraulik-Hubantriebs und eines mechanischen Hubspindelsystems auf, wobei als Hubspindelantrieb ein Elektromotor vorgesehen ist, der einer von der Schließ- und Öffnungsstellung der Spritzgießform abhängigen Positionierregelung zugeordnet ist. Der Hydraulik-Hubantrieb ist über ein Servoventil von einem Druckregelkreis ansteuerbar, der in Abhängigkeit zu der Schließkraft zwischen den beiden Formhälften der Spritzgießform steht.

Die beiden letztgenannten Dokumente weisen den Nachteil auf, dass sobald hydraulisch eine Schließkraft aufgebracht wird, das Linearübertragungselement zu einer Rückdrehbewegung durch ein Rückdrehmoment neigt, das aufgrund des sehr guten Wirkungsgrades des verwendeten Linearübertragungselements bereits bei einer kleinen Maschine mit niedrigen Schließkräften mehrere 1000 Nm betragen kann.

In der nachveröffentlichten deutschen Patentanmeldung DE 10 2023 111 739 A1 wird dieses Rückdrehmoment aufgenommen, indem eine Rückdrehsicherung hydraulisch in eine Anschlagposition gefahren wird, bevor es zu einem hydraulischen Kraftaufbau kommt. Die serielle und zentrale Anordnung des elektrischen Antriebs und der Hydraulikeinheit ist jedoch nachteilig in Bezug auf die Baulänge der Formschließeinheit und erfordert einen höheren Aufwand in Bezug auf die Rückdrehsicherung.

In der DE 195 36 565 A1 ist eine Kunststoff-Spritzgießmaschine offenbart. Mindestens eine der Baugruppen der Spritzgießmaschine, die eine Drehbewegung elektromechanisch in eine geradlinige Bewegung umsetzen, wie die Schließeinheit, die Düsenbewegungseinheit, die Einspritzeinheit, der Auswerfer und die Schließdüsenbetätigungseinheit, weist einen Antrieb mit einem Planetengetriebe und einer Rollengewindespindel auf, die durch Rückhaltemittel an einem passiven Rückdrehen gehindert wird. Der drehbare Teil des Antriebs mit Planetengetriebe und Rollengewindespindel ist in Spindellängsrichtung gegen die Kraft elastischer Rückstellmittel beweglich gelagert. Sperrmittel überwinden die Kraft der Rückstellmittel und sichern die Teile der Planetenrollengewindespindel durch eine von außen erzeugte Reaktionskraft gegen Verdrehen.

Aus der DE 199 56 190 A1 ist eine Vorrichtung bzw. ein Verfahren zur Durchführung einer zweistufigen linearen Bewegung zur Bewegung einer bewegbaren Baueinheit gegenüber einer feststehenden Baueinheit bekannt. Eine erste Antriebseinheit treibt eine Welle an, die mit einem Rohr in Wirkverbindung steht, das mit der bewegbaren Baueinheit verbunden ist. Wird eine vorbestimmte Bedingung im Wesentlichen erreicht, wird von der ersten Antriebseinheit auf eine zweite Antriebseinheit umgeschaltet. Indem das Rohr die feststehende Baueinheit durchdringt und sich bei Betätigung der ersten Antriebseinheit relativ zur feststehenden Baueinheit bewegt und Mittel zum bedarfsweisen Trennen der Welle aus dem Kraftfluss bei Erreichen der vorbestimmbaren Bedingung an der feststehenden Baueinheit angeordnet sind und bei Erreichen der Bedingung das Rohr lösbar festlegen, werden bei einer zweistufigen linearen Bewegung die Elemente geschont, die die Drehbewegung in eine Geradeausbewegung übertragen.

Die DE 197 50 057 A1 zeigt eine Formschließeinheit für eine Spritzgießmaschine mit einer ersten Vorrichtung, die zum Bewegen des beweglichen Formträgers in einer Richtung zu und von einem stationären Formträger vorgesehen ist. Durch den Anschluss einer zweiten Vorrichtung kommt die erste Vorrichtung mit ihrem drehbaren Element in Berührung, wodurch die von ihr übertragene Kraft entkoppelt wird. Eine von der zweiten Vorrichtung erzeugte Zusatzkraft wird über ein als Druckrohr ausgebildetes Kraftübertragungselement ebenfalls auf den beweglichen Formträger übertragen. Zwischen dem Kraftübertragungselement und einem Abstützelement ist eine als Entkopplungseinrichtung ausgebildete Schaltkammer angeordnet, die durch ein hydraulisches Medium betätigbar ist, wobei der Druck in der Schaltkammer ähnlich wie bei der zweiten Vorrichtung beliebig schaltbar ist. Hierdurch wird ein schaltbarer Übergang zwischen der ersten Vorrichtung und der zweiten Vorrichtung erreicht.

Der Erfindung liegt daher die Aufgabe zugrunde, eine Formschließeinheit für eine Maschine, insbesondere eine Spritzgießmaschine, anzugeben, die eine kurze Baulänge ohne Kniehebel und Formhöhenverstellung aufweist sowie eine Rückdrehsicherung verwendet, die nur einem geringen Rückdrehmoment entgegenwirken muss und nur einen minimalen nicht nutzbaren Hub eines beweglichen Formträgers erzeugt.

Die Aufgabe wird mit einer Formschließeinheit für eine Maschine, insbesondere eine Spritzgießmaschine, gemäß den Merkmalen des Anspruchs 1 gelöst.

Durch die parallele Anordnung der Linearbewegungseinheiten in Verbindung mit einer hydraulischen Kraftaufbringung kann eine Formschließeinheit realisiert werden, die ohne Kniehebel und Formhöhenverstellung auskommt und eine kurze Baulänge der Formschließeinheit mit einem geringem Einfahrbereich in eine Rückdrehsicherung ermöglicht. Große Wege des beweglichen Formträgers werden mit Hilfe der durch den Motor angetriebenen Linearbewegungseinheiten zurückgelegt. Anschließend werden die Formteile vollständig durch die Hydraulikeinheiten geschlossen und mit einer ausreichenden Kraft während des Einspritzvorgangs geschlossen gehalten. Sobald die Linearbewegungseinheiten an einer Rückdrehung über die Rückdrehsicherung gehindert wird, kann über die Hydraulikeinheiten an der Formschließeinheit die Schließkraft hydraulisch aufgebracht werden. Durch die Sperrung der Rückdrehbewegung an nahezu jeder Position, kann der erforderliche hydraulische Hub im Vergleich zu anderen Systemen sehr klein gehalten werden. Neben den oben genannten Vorteilen beim Betrieb lässt sich bei Verwendung mehrerer Linearbewegungseinheiten vorteilhaft die Baulänge dadurch weiter verringern, dass zwischen diesen Linearbewegungseinheiten Raum zur Unterbringung weiterer Komponenten vorhanden ist, der bei nur einer Linearbewegungseinheit, die dann etwa mittig angeordnet ist, belegt ist.

Die Aufgabe wird auch mit einer Maschine, insbesondere einer Spritzgießmaschine, gemäß den Merkmalen des Anspruchs 12 gelöst. Die Maschine weist dabei eine Formschließeinheit nach einem der Ansprüche 1 bis 11 auf.

Weiterhin wird die Aufgabe auch mit einem Verfahren zum Betreiben einer Formschließeinheit einer Maschine, insbesondere eine Spritzgießmaschine, gemäß den Merkmalen des Anspruchs 13 gelöst. Dabei umfasst das Verfahren die Merkmale des unabhängigen Anspruchs 1.

Vorteilhafte Weiterbildungen sind Gegenstand der abhängigen Ansprüche.

In einer bevorzugten eine Ausführung des Getriebes und der darauf abgestimmten Rückdrehsicherung berücksichtigenden Ausführung der Formschließeinheit wird vorteilhaft die Ausführung und Dimensionierung des Getriebes und der Rückdrehsicherung dadurch vereinfacht, dass das Getriebe ein Zahnradgetriebe, insbesondere ein Stirnradgetriebe, oder ein Riemengetriebe sein kann, wobei das Getriebe mit der Rückdrehsicherung verbunden ist und wobei zumindest das Getriebe zumindest teilweise in die Abstützplatte oder den beweglichen Formträger integriert sein kann. Dabei können die Übersetzung des Getriebes und die Bremse bzw. Arretierung der Rückdrehsicherung optimal aufeinander abgestimmt werden, wodurch die aufzuwendende Brems- bzw. Arretierungskraft vorteilhaft minimiert werden kann.

Bevorzugterweise kann eine Ausführung und Dimensionierung der Rückdrehsicherung in einer weiteren Ausführungsform der Formschließeinheit vorteilhaft unter Berücksichtigung der Ausführung des Getriebes erfolgen, wobei die Rückdrehsicherung als Bremse oder Arretierung, insbesondere eine Backenbremse, eine Scheibenbremse, eine Lamellenbremse, ein schaltbarer Freilauf, eine Schiebehülse, eine Sperrklinke oder eine konisch kegelige Spann- oder Reibhülse ausführbar ist.

Vorzugsweise kann der bewegliche Formträgers mittels der Linearbewegungseinheiten bis zu einem Punkt bewegt werden, kurz bevor die Formteile der Spritzgießform geschlossen sind. Dann wird die weitere Bewegung an die Hydraulikeinheiten übergeben bei gleichzeitiger Betätigung der Bremse, um vorteilhaft das Rückdrehverhalten zu eliminieren. Dadurch ergibt sich vorteilhaft eine kontinuierliche Bewegung des beweglichen Formträgers, was zu verkürzten Zykluszeiten beiträgt.

Vorzugsweise greift die Rückdrehsicherung unter Reduzierung der für die Rückdrehsicherung erforderlichen Kraft nahe dem antriebsseitigen Ende des Getriebes an, d.h. nahe am Antrieb vor der Übersetzung in Richtung Spindelantrieb. Durch die Verwendung des Getriebes kann eine klein dimensionierte Rückdrehsicherung verwendet werden, da diese dank des Getriebes nur eine vergleichsweise geringe Gegenkraft zum durch die Hydraulikeinheiten erzeugten Rückdrehmoment aufbringen muss.

Vorteilhaft können in einer bevorzugten Ausführungsform der Formschließeinheit die Hydraulikeinheiten jeweils ein Kolben/Zylinderpaar mit kurzem Kolbenhub umfassen, wobei der Kolben oder der Zylinder zumindest teilweise in die Abstützplatte oder den beweglichen Formträger integriert sein kann. Dadurch werden vorteilhaft einerseits die benötigte hydraulische Antriebsleistung und die Größe des Ölbehälters minimiert und kann andererseits die Baulänge der Formschließeinheit reduziert werden. Durch das geringere Ölvolumen kann die hydraulische Antriebsleistung und somit der Energiebedarf sowie der CO2-Fußabdruck ebenfalls minimiert werden.

Ebenso kann in einer bevorzugten Ausführungsform der Formschließeinheit eine Ausführung der Linearbewegungseinheiten auf eine Ausführung und Dimensionierung der Maschine vorteilhaft dadurch anpassbar sein, dass die Linearbewegungseinheiten jeweils einen Kugelgewindetrieb, einen Planetenrollengewindetrieb oder eine Zahnstange umfassen.

Eine bevorzugte Ausführungsform der Formschließeinheit ermöglicht vorteilhaft eine Anpassung der Formschließeinheit an räumliche oder funktionale Vorgaben dadurch, dass die Linearbewegungseinheiten vertikal mittig nebeneinander oder horizontal mittig übereinander in der Formschließeinheit angeordnet sein können.

Bevorzugt kann eine Ausführung der Linearbewegungseinheiten auf eine Ausführung und Dimensionierung der Maschine vorteilhaft dadurch anpassbar sein, dass die Linearbewegungseinheiten jeweils eine nicht rotierende Spindelmutter und eine rotierende Gewindespindel aufweisen, wobei beim Druckaufbau der Hydraulikeinheiten ein unbeabsichtigtes Rückdrehen der Spindelmutter vorteilhaft dadurch verhindert wird, dass die nicht rotierende Spindelmutter translatorisch beweglich und rotatorisch unbeweglich mit der Hydraulikeinheit verbunden sein kann.

In einer bevorzugten Ausführungsform der Formschließeinheit wird eine Anzahl der notwendigen Bauteile und die Baulänge der Formschließeinheit vorteilhaft dadurch verringert, dass die nicht rotierende Spindelmutter verdrehsicher mit dem Kolben oder dem Zylinder der Hydraulikeinheit ausgeführt sein kann, wobei die nicht rotierende Spindelmutter zumindest teilweise in den Kolben oder den Zylinder integriert sein kann.

Bevorzugt kann in einer alternativen Ausführungsform eine Ausführung der Linearbewegungseinheiten auf eine Ausführung und Dimensionierung der Maschine vorteilhaft dadurch anpassbar sein, dass die Linearbewegungseinheiten jeweils eine rotierende Spindelmutter und eine nicht rotierende Gewindespindel aufweisen.

Eine weitere bevorzugte Ausführungsform verhindert beim Druckaufbau der Hydraulikeinheiten ein unbeabsichtigtes Rückdrehen der Gewindespindel vorteilhaft dadurch, dass die nicht rotierende Gewindespindel translatorisch beweglich und rotatorisch unbeweglich mit der Hydraulikeinheit verbunden ist, wobei eine Anzahl der notwendigen Bauteile und eine Baulänge der Formschließeinheit vorteilhaft dadurch verringert werden, dass die die nicht rotierende Gewindespindel verdrehsicher mit dem Kolben oder dem Zylinder der Hydraulikeinheit ausgeführt ist, wobei die nicht rotierende Gewindespindel zumindest teilweise in den Kolben oder den Zylinder integriert sein kann. Bei damit rotierender Spindelmutter und feststehender Gewindespindel können die Hydraulikkomponenten in ihrer Dimensionierung vorteilhaft minimiert werden, da für den Kraftaufbau die Kolbenseite zum Einsatz kommt im Gegensatz zu einer Lösung mit rotierender Gewindespindel. Dort kommt für den Kraftaufbau nur eine Kolbenstangenseite zum Einsatz, was aufgrund der durchtauchenden Gewindespindel einen größere Dimensionierung erfordert.

Vorteilhaft kann eine Anpassung der Formschließeinheit an räumliche oder funktionale Vorgaben in einer anderen bevorzugten Ausführungsform dadurch erreicht werden, dass der Motor auf einer Seite der Abstützplatte oder des beweglichen Formträgers angeordnet ist und die Rückdrehsicherung auf der anderen Seite.

In einer weiteren die Ausführung der Maschine vereinfachenden Ausführungsform der Formschließeinheit kann vorteilhaft vollständig auf die Verwendung von Holmen verzichtet werden. In diesem Fall kann die Kraftübertragung zwischen der Abstützplatte und dem nicht beweglichen Formträger über einen C-förmigen Bügel realisiert werden, der auch in den Maschinenständer integriert sein kann.

Verfahrensgemäß kann vorzugsweise die Rückdrehsicherung als Bremse den beweglichen Formträger für einen stetigen Übergang einer mittels der Linearbewegungseinheiten hervorgerufenen Bewegung und einer mittels der Hydraulikeinheiten hervorgerufenen Bewegung des beweglichen Formträgers bremsen. Die dadurch mögliche kontinuierliche Bewegung ohne Stopzeiten kann zur Verringerung der Zykluszeit beitragen.

Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Erfindung wird nun anhand eines Ausführungsbeispiels näher erläutert. Es zeigen:
- Fig. 1: eine perspektivische Gesamtansicht der Maschine mit einer Formschließeinheit,
- Fig. 2: eine perspektivische Ansicht einer ersten Ausführungsform einer Formschließeinheit mit rotierenden Gewindespindeln und nicht rotierenden Gewindemuttern,
- Fig. 3: eine Detailansicht der Fig. 2 mit einer als Hydraulikkolben ausgebildeten Gewindemutter mit einem formschlüssigen Verdrehschutz,
- Fig.4: eine Detailansicht der Fig. 2 mit einer als Hydraulikkolben ausgebildeten Gewindemutter, bei der der Verdrehschutz als Verbindungsbrücke zwischen den Gewindemuttern ausgeführt ist,
- Fig. 5: eine Detailansicht der Fig. 2 mit einem außerhalb der Formschließeinheit angeordneten Getriebe mit Rückdrehsicherung,
- Fig. 6: eine Detailansicht der Fig. 2 mit dem Getriebe mit Rückdrehsicherung und einem innerhalb der Formschließeinheit angeordneten Motor,
- Fig. 7: eine perspektivische Ansicht einer zweiten Ausführungsform einer Formschließeinheit mit nicht rotierenden Gewindespindeln und rotierenden Gewindemuttern,
- Fig. 8: eine Detailansicht der Fig. 7, bei der ein Hydraulikkolben auf die nicht rotierende Gewindespindel aufgesetzt ist und eine Verdrehsicherung aufweist,
- Fig. 9: eine Detailansicht der Fig. 7 mit einem innerhalb der Formschließeinheit angeordneten Getriebe mit Rückdrehsicherung, dargestellt als Magnetbremse oder schaltbarer Freilauf,
- Fig. 10: eine Detailansicht der Fig. 7 mit einem außerhalb der Formschließeinheit angeordneten Getriebe mit als Kegelbremse ausgeführter Rückdrehsicherung ,
- Fig. 11: eine Detailansicht der Fig. 7 mit einem außerhalb der Formschließeinheit angeordneten Getriebe mit als Schiebehülsenbremse ausgeführter Rückdrehsicherung,
- Fig. 12:: eine Detailansicht der Fig. 7 mit einem außerhalb der Formschließeinheit angeordneten Getriebe mit als Scheibenbremse ausgeführter Rückdrehsicherung,
- Fig. 13: eine Detailansicht der Fig. 7 mit einem innerhalb der Formschließeinheit angeordneten Getriebe mit als Kegelbremse ausgeführter Rückdrehsicherung ,
- Fig. 14: eine Detailansicht der Fig. 7 mit einem innerhalb der Formschließeinheit angeordneten Getriebe mit als Schiebenhülsenbremse ausgeführter Rückdrehsicherung,
- Fig. 15: eine perspektivische Ansicht einer dritten Ausführungsform einer holmlos ausgeführten Formschließeinheit mit einem über C-Bügel geschlossenen Kraftrahmen,
- Fig. 16: ein Diagramm der Geschwindigkeit des beweglichen Formträgers über dem Weg bei der Formschließbewegung.

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

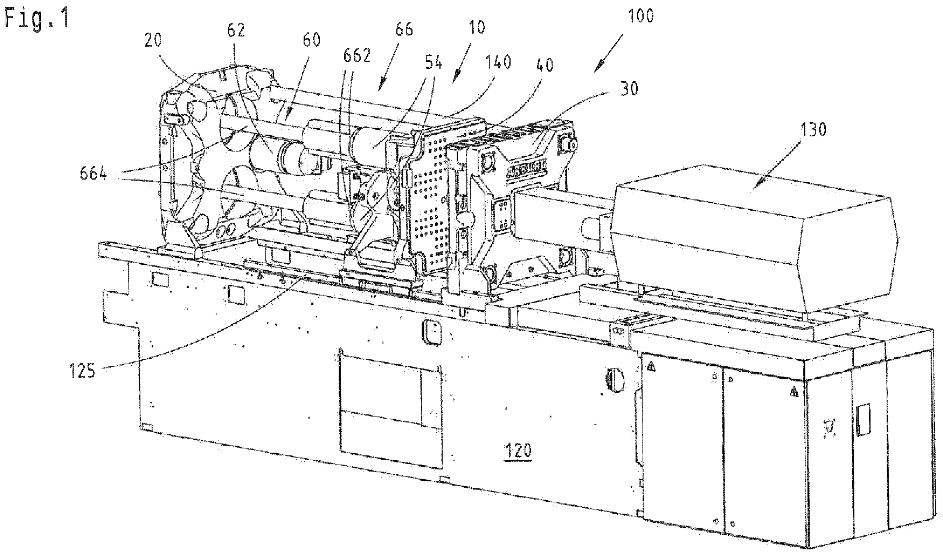

Fig. 1 zeigt eine Formschließeinheit 10 für eine Maschine 100 zur Verarbeitung von Kunststoffen und anderen plastifizierbaren Materialien, insbesondere eine Spritzgießmaschine.

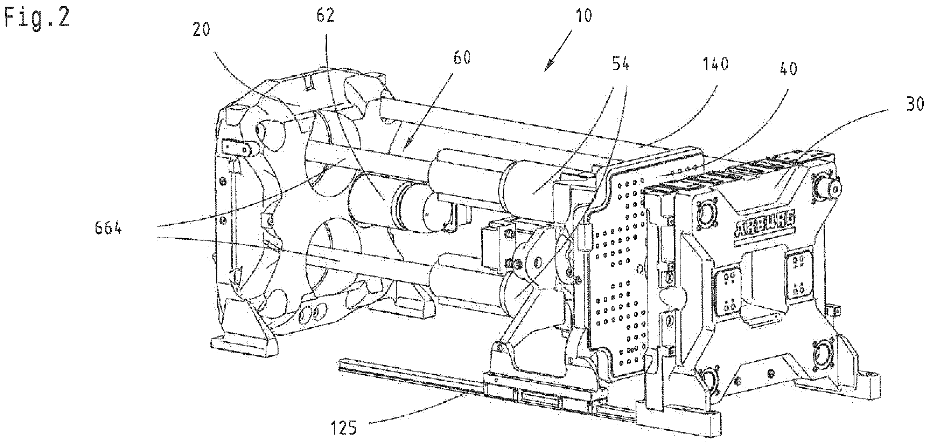

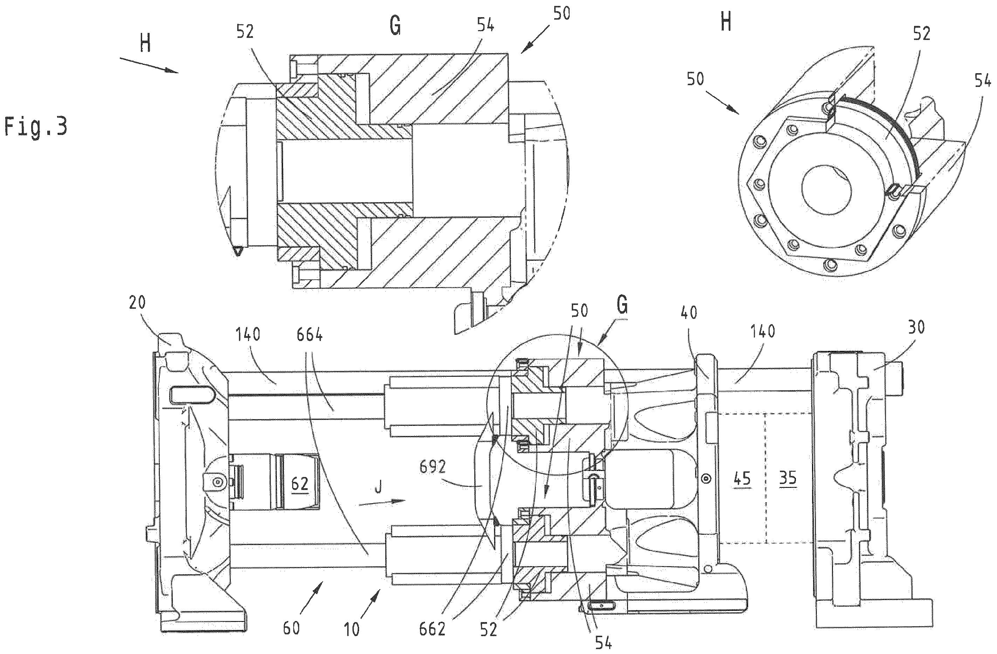

Aufbau und Betrieb einer Spritzgießmaschine sind dem Fachmann grundsätzlich bekannt. Der Spritzgießmaschine werden Kunststoffe oder andere plastifizierbare Materialien zugeführt, die in einem Plastifizierzylinder einer Spritzgießeinheit 130 gemischt, plastifiziert und homogenisiert werden. Während des Plastifizierungsvorgangs wird vor einem Fördermittel plastifiziertes Material aufdosiert. Im Anschluss wird durch eine Axialbewegung des Fördermittels das plastifizierte Material in einen Formhohlraum einer in Fig. 3 gestrichelt angedeuteten Spritzgießform mit wenigstens zwei Formteilen 35, 45 eingespritzt, welche im Betriebszustand zwischen einem beweglichem Formträger 40 und einem nicht beweglichem Formträger 30 aufgenommen ist. Der bewegliche Formträger 40 kann bei seiner Bewegung an mehreren, in der Regel vier, Holmen 140 geführt sein, die am nicht beweglichen Formträger 30 und an einer Abstützplatte 20 gelagert sind. Die Holme sind in den Fig. 1 bis 3 und 7 im in der Ansicht vorderen Bereich zur Steigerung der Übersichtlichkeit zum Teil weggelassen. In den Ausführungsbeispielen erfolgt die Führung des beweglichen Formträgers über Linearführungen 125 (Fig 1, 2). Der bewegliche Formträger ist daher im Bereich der Holme 140 frei gespart. Die Holme übernehmen daher die Funktion von Zugankern zum Schließen des Kraftrahmens und zur Übertragung der Schließkräfte zwischen Abstützplatte 20 und nicht beweglichem Formträger 30.

Während des Einspritzvorgangs ist die Spritzgießform durch eine Formschließeinheit 10 geschlossen. Sobald das eingespritzte plastifizierte Material im Formhohlraum ausgehärtet ist, wird mittels der Formschließeinheit 10 die Spritzgießform wieder geöffnet, so dass das fertige Spritzteil entnommen werden kann. Dieser Prozess erfolgt zyklisch.

In Fig. 3 umfasst die Spritzgießform zwei Formteile, ein erstes Formteil 35 und ein weiteres Formteil 45. Zwei derartige Formteile werden auch als Formhälften angesprochen. Grundsätzlich kann eine Spritzgießform aber auch aus mehr als zwei Formteilen bestehen. Im Folgenden wird daher der Begriff "Formteil" für die Teile einer Spritzgießform verwendet. Diese Formteile werden durch die Formschließeinheit 10 zyklisch in einen Zustand gebracht, in dem die Formteile 35, 45 einen definierten minimalen Abstand zueinander aufweisen, was in der Regel einem Formschluss oder nahezu Formschluss der Spritzgießform entspricht, oder in einen Zustand gebracht in dem sie bei geöffneter Spritzgießform einen größeren Abstand aufweisen. Im definierten minimalen Abstand werden die Formteile 35, 45, falls sie noch nicht in Anlage sind, ggf. vollständig in Anlage gebracht und mit Druck beaufschlagt.

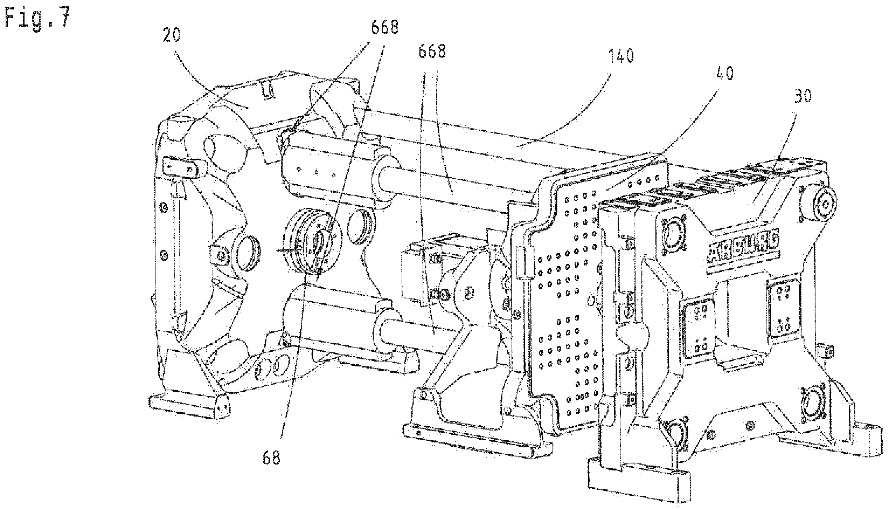

Wie in Fig. 2 und 7 gezeigt, weist die Maschine 100 eine Abstützplatte 20, einen nicht beweglichen Formträger 30, der ein erstes Formteil trägt, einen beweglichen Formträger 40, der ein weiteres Formteil trägt, mindestens zwei Hydraulikeinheiten 50 mit einem Kolben/ZylinderPaar 52, 54 und einen Antrieb 60 auf. Der Antrieb 60 umfasst einen Motor 62, ein Getriebe 64, mindestens zwei Linearbewegungseinheiten 66 und mindestens eine Rückdrehsicherung 68, wie in den Fig. 2, 5 bis 7 und 9 bis 14 gezeigt. Der Antrieb 60 und/oder die Hydraulikeinheiten 50 sind dazu eingerichtet, den beweglichen Formträger 40 zu bewegen. Die Hydraulikeinheiten 50 sind eingerichtet, wenigstens einen Druck auf den beweglichen Formträger 40 aufzubringen. Motor 62 und Getriebe 64 sind an der Abstützplatte 20 oder dem beweglichen Formträger 40 angeordnet.

Jede der mindestens zwei Linearbewegungseinheiten 66 ist mit jeweils einer Hydraulikeinheit 50 wirkverbunden, die mit der Abstützplatte 20 oder dem beweglichen Formträger 40 verbunden ist. Außerdem sind die Linearbewegungseinheiten 66 eingerichtet, den nicht beweglichen Formträger 30 und den beweglichen Formträger 40 wahlweise in einen Zustand zu bringen, in dem die Formteile 35, 45 einen definierten minimalen Abstand zueinander aufweisen oder einen größeren Abstand aufweisen. Letztlich sind die mindestens zwei Hydraulikeinheiten 50 dazu eingerichtet, den beweglichen Formträger 40 in dem Zustand, in dem die Formteile 35, 45 den definierten minimalen Abstand zueinander aufweisen, mit einem Druck zu beaufschlagen und die Formteile 35, 45 - soweit noch nicht bereits geschehen - in Anlage zu bringen, wobei der Antrieb 60 gleichzeitig durch die mindestens eine Rückdrehsicherung 68 gesichert ist. Durch diesen Aufbau wird eine Formschließeinheit 10 für eine Maschine 100, insbesondere eine Spritzgießmaschine, geschaffen, die vorteilhaft eine kurze Baulänge ohne Kniehebel und Formhöhenverstellung aufweist sowie eine Rückdrehsicherung 68 verwendet, die nur einem geringen Rückdrehmoment entgegenwirken muss und nur einen minimalen nicht nutzbaren Hub eines beweglichen Formträgers 40 erzeugt.

Die mindestens zwei Linearbewegungseinheiten 66 sind zwischen der Abstützplatte 20 und dem beweglichen Formträger 40 angeordnet und mit dem Getriebe 64 sowie dem Motor 62 verbunden. Dies hat den Vorteil, dass eine flexiblere Konstruktion möglich wird und mittig leicht ein Freiraum zur Aufnahme weitere Komponenten geschaffen werden kann.

Bei diesen Lösungen ist jede der Linearbewegungseinheiten 66 mit jeweils einer der Hydraulikeinheiten 50 wirkverbunden, die mit der Abstützplatte 20 oder dem beweglichen Formträger 40 verbunden sind. Außerdem sind die Linearbewegungseinheiten 66 eingerichtet, den nicht beweglichen Formträger 30 und den beweglichen Formträger 40 wahlweise in einen Zustand zu bringen, in dem die Formteile 35, 45 einen definierten minimalen Abstand zueinander aufweisen oder einen größeren Abstand aufweisen.

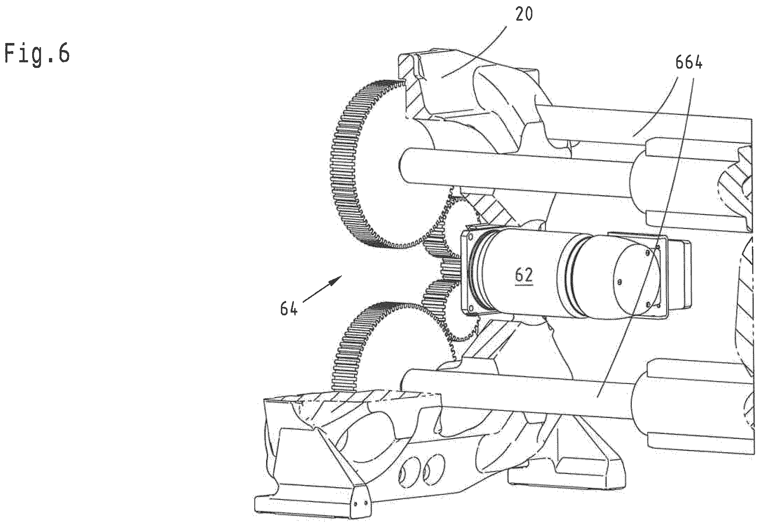

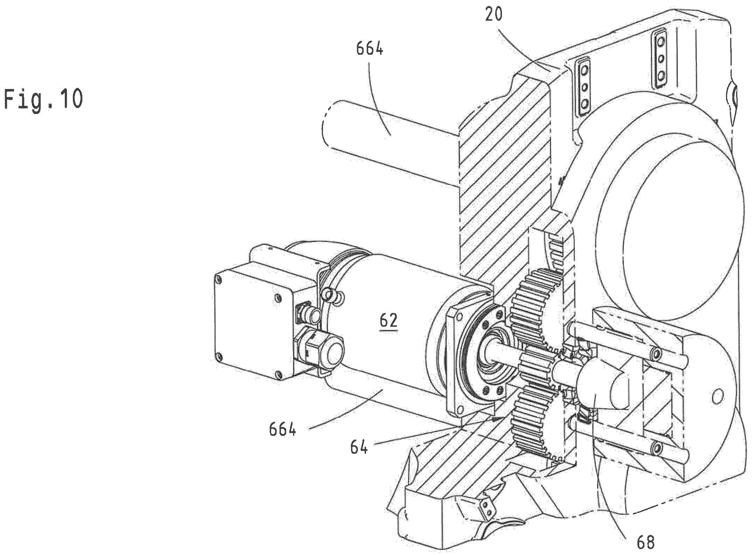

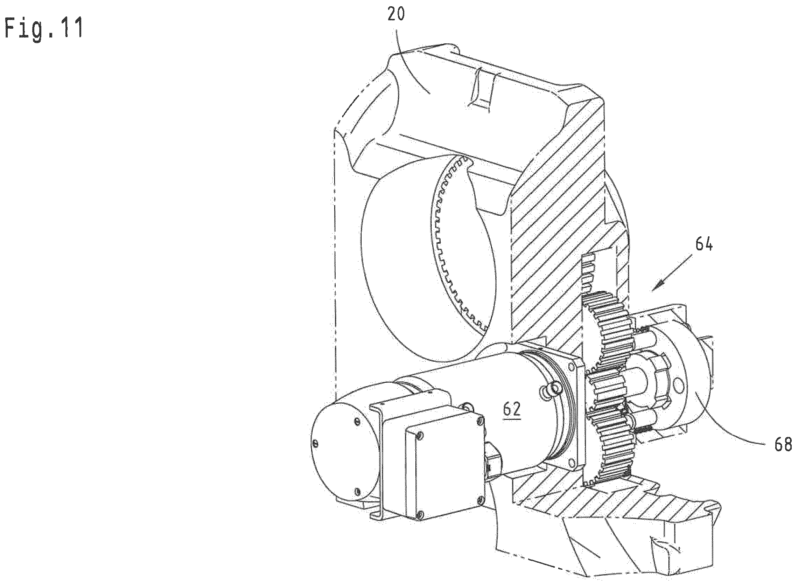

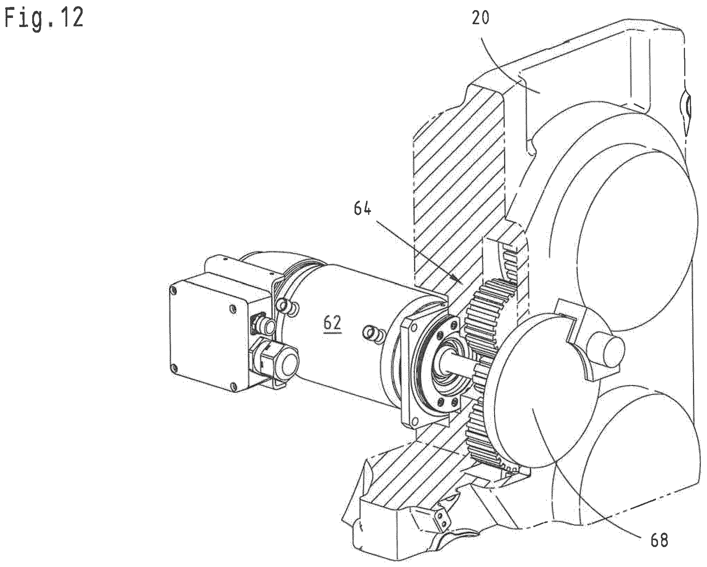

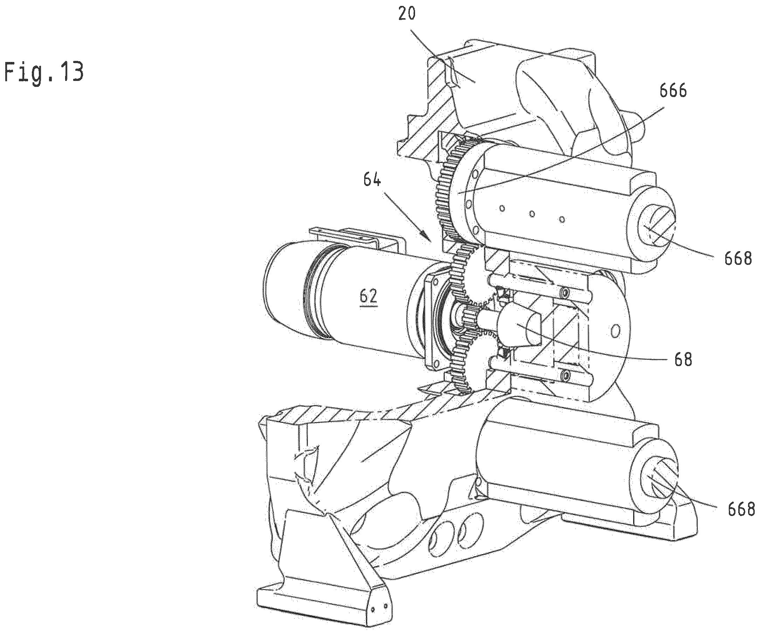

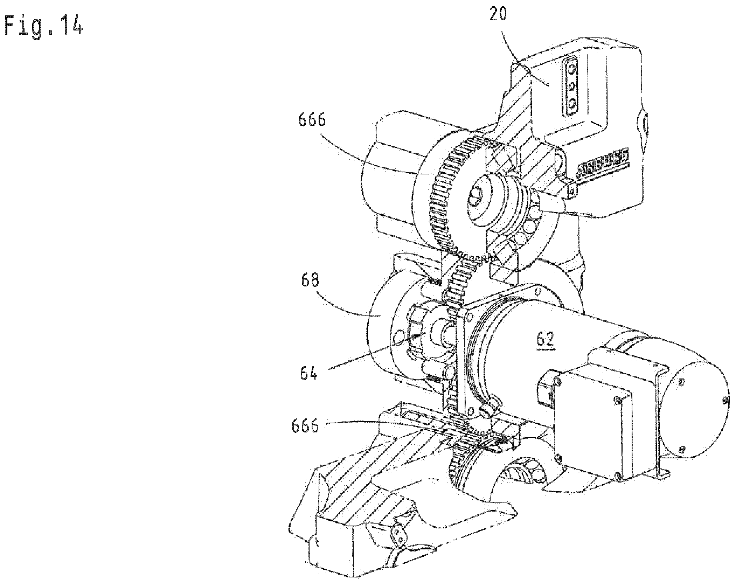

Das Getriebe 64 kann vorzugsweise ein Zahnradgetriebe, insbesondere ein Stirnradgetriebe, oder ein Riemengetriebe sein und mit der Rückdrehsicherung 68 verbunden sein, wobei zumindest das Getriebe 64 zumindest teilweise in die Abstützplatte 20 oder den beweglichen Formträger 40 integriert sein kann. Der vorzugsweise mögliche Einsatz eines Stirnradgetriebes, wie in den Fig. 6 und 9 bis 14 abgebildet, oder einer Riemenübersetzung ermöglicht vorteilhaft, das erforderliche Rückdrehmoment mit der Getriebeübersetzung auf einen kleinen Wert herunter zu reduzieren, sodass einfache Rückdrehsicherungen 68 verwendet werden können. Die Rückdrehsicherung 68 kann somit vorteilhaft als einfache Bremse oder Arretierung, insbesondere als eine Backenbremse, eine Scheibenbremse (Fig. 12), eine Lamellenbremse, ein schaltbarer Freilauf, eine Schiebehülse (Fig. 11, 14), eine Sperrklinke oder eine konisch kegelige Spannhülse (Fig. 10, 13) ausgeführt sein.

Eine zumindest teilweise Integration des Getriebes 64 in die Abstützplatte 20 oder alternativ - in einer zeichnerisch nicht dargestellten Alternative - in den beweglichen Formträger 40 reduziert die Baulänge der Formschließeinheit 10. Je nach Ausführung können die Rückdrehsicherung 68 und der Motor 62 an unterschiedlichen Positionen angeordnet werden, mit dem Ziel die Baulänge möglichst optimal einzukürzen.

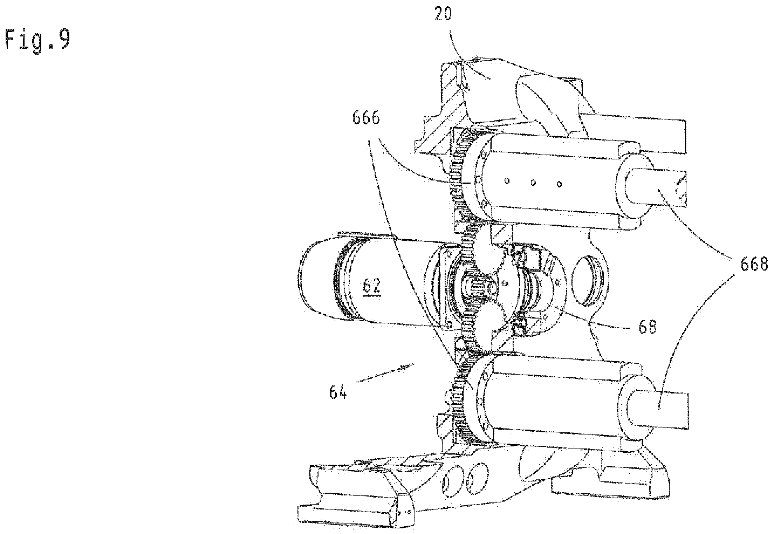

Bei der möglichen Verwendung einer rotierenden Spindelmutter 666 (Fig. 7, 9) bietet sich an, den Motor 62 außerhalb der Formschließeinheit 10 anzuordnen. Damit wird der für die durchtauchende nicht rotierende Gewindespindel 668 erforderliche Raum auch für den Motor 62 optimal genutzt. Die Rückdrehsicherung 68 wird in diesem Fall vorzugsweise innerhalb der Formschließeinheit 10 angeordnet. Damit kann die Formschließeinheit 10 weiter eingekürzt werden.

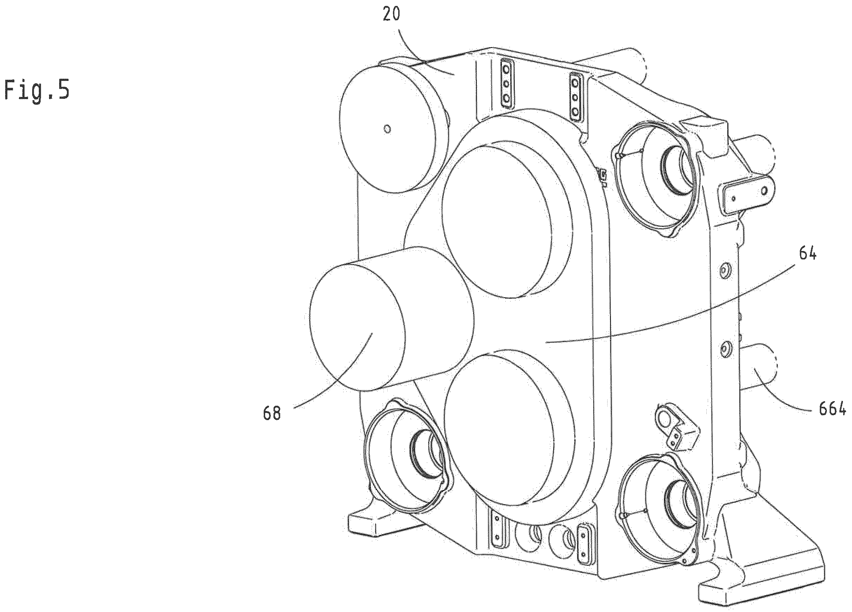

Bei der alternativ möglichen Verwendung einer rotierenden Gewindespindel 664 (Fig. 5, 6) wäre die Rückdrehsicherung 68 aufgrund deren geringeren Aufbauhöhe außerhalb der Formschließeinheit 10 vorzusehen und der Motor 62 sollte seitlich innerhalb der Formschließeinheit 10 angeordnet sein.

Sinnvollerweise kann bei der Bremsfunktion der Rückdrehsicherung 68 die Getriebeübersetzung dahingehend ausgenutzt werden, dass auf der Antriebswelle nur ein Bruchteil der Bremskraft benötigt wird. Durch die Bremskraftreduktion ist die Bandbreite der möglichen Rückdrehsicherungen 68 deutlich größer und kann auch reibschlüssig realisiert werden. Dies eröffnet den Vorteil, dass die Formteile 35,45 mit den Linearbewegungseinheiten 66 zunächst auf Kontakt gefahren werden, bevor die Rückdrehsicherung 68 aktiviert wird, was die erforderlichen Hydraulikeinheiten 50 und deren Antriebsleistung auf einen minimalen Wert verringert. Grundsätzlich kann die Gegenkraft bzw. die Brems- oder Haltekraft aber auch ohne die Nutzung einer Getriebeübersetzung aufgebracht werden. Die Rückdrehkraft ist dann nur entsprechend höher.

Grundsätzlich kann vorteilhaft mit einer derartigen Bremsfunktion ein kontinuierlicher Schließablauf realisiert werden, d.h. die Fahrbewegungen der Linearbewegungseinheiten 66 gehen nahtlos in die Druckaufbaubewegung zur Aufbringung der Schließkraft über, weil die Rückdrehsicherung über die Bremse im Ablauf bedarfsweise jederzeit und damit stets zum für den Ablauf geeignetsten Zeitpunkt in Kontakt gebracht werden kann. Bei schaltbaren Brems- bzw. Rückdrehsystemen wird hingegen im Ablauf eine Stillstandzeit benötigt ,um die Rückdrehsicherung in Kontakt zu bringen.

Die verringerte Antriebsleistung und damit einhergehend auch ein kleiner Ölbehälter kann in vorteilhafter Weise dadurch erreicht werden, dass die Hydraulikeinheiten 50 jeweils ein Kolben/Zylinder-Paar 52, 54 mit kurzem Kolbenhub umfassen, wobei der Kolben 52 oder der Zylinder 54 zumindest teilweise in die Abstützplatte 20 oder den beweglichen Formträger 40 integriert sein kann. Dadurch kann weiterhin vorteilhaft die Baulänge der Formschließeinheit 10 reduziert werden.

Die Linearbewegungseinheiten 66 können in Abhängigkeit von der angestrebten Maschinenlösung jeweils einen Kugelgewindetrieb, einen Planetenrollengewindetrieb oder eine Zahnstange umfassen. Dadurch ist vorteilhaft eine Anpassung der Formschließeinheit 10, insbesondere der Linearbewegungseinheiten 66, auf eine Ausführung und Dimensionierung der Maschine 100 möglich.

Eine Anpassung der Formschließeinheit 10 an räumliche oder funktionale Vorgaben kann vorteilhaft dadurch erreicht werden, dass die Linearbewegungseinheiten 66 entweder vertikal mittig nebeneinander oder horizontal mittig übereinander in der Formschließeinheit 10 angeordnet sind. Dadurch ist z. B. in vorteilhafter Weise ein größerer Freiraum möglich, durch den ein Anwender der Maschine 100 einen besseren Zugang zur Maschine 100 erhält.

Die Formschließeinheit 10 kann auch vorteilhaft an eine Ausführung und Dimensionierung der Maschine 100 angepasst werden, wenn die Linearbewegungseinheiten 66 jeweils eine nicht rotierende Spindelmutter 662 und eine rotierende Gewindespindel 664 aufweisen, wie in den Fig. 2 bis 4, 6 und 10 abgebildet. Dadurch kann z. B. die Verteilung einer Masse, insbesondere einer bewegten Masse, innerhalb der Formschließeinheit 10 in Abhängigkeit vom Einsatzzweck verändert werden. In Abhängigkeit von der Anordnung des Getriebes 64, der Rückdrehsicherung 68 und des Motors 62 an der Abstützplatte 20 oder dem beweglichen Formträger 40, kann sowohl die rotierende Gewindespindel 664 als auch die nicht rotierende Spindelmutter 662 entweder direkt an dem beweglichen Formträger 40 oder der Abstützplatte 20 angeordnet sein. Wenn die nicht rotierende Spindelmutter 662 translatorisch beweglich und rotatorisch unbeweglich mit der Hydraulikeinheit 50 verbunden ist, verhindert dies vorteilhaft beim Druckaufbau der Hydraulikeinheiten 50 ein unbeabsichtigtes Rückdrehen der Spindelmuttern 662. In diesem Fall kann die nicht rotierende Spindelmutter 662 auch verdrehsicher mit dem Kolben 52 oder dem Zylinder 54 der Hydraulikeinheit 50 ausgeführt sein, wobei die nicht rotierende Spindelmutter 662 zumindest teilweise in den Kolben 52 oder den Zylinder 54 integriert sein kann.

Gemäß Fig. 3 ist die Spindelmutter 662 translatorisch beweglich, weil sie zugleich auch den Kolben 52 der Hochdruckeinheit darstellt. Damit es beim Aufbau von Hochdruck nicht .zu einer Drehung der Spindelmutter 662 kommt, ist diese rotatorisch unbeweglich (z.B. durch Sechskant, Bolzen, Polygon....). Dadurch das die Spindelmutter rotatorisch unbeweglich. aber translatorisch frei ist, möchte der aufgebrachte Druck die Spindelmutter 662 nach hinten drücken, da die Gewindespindel 664 rotatorisch gelagert ist und der Motor 62 das aufgebrachte Drehmoment nicht halten kann, würde die Gewindespindel 664 sich einfach nach hinten drehen und nicht die Mutter für das Aufbringen des hydraulischen Hochdruck an der Position halten. Kommt jetzt die Rückdrehsicherung 68 als Bremse ins Spiel, wird verhindert, dass die im Betrieb drehbare Gewindespindel 664 aufgrund einer äußeren Kraft zurückgedreht wird

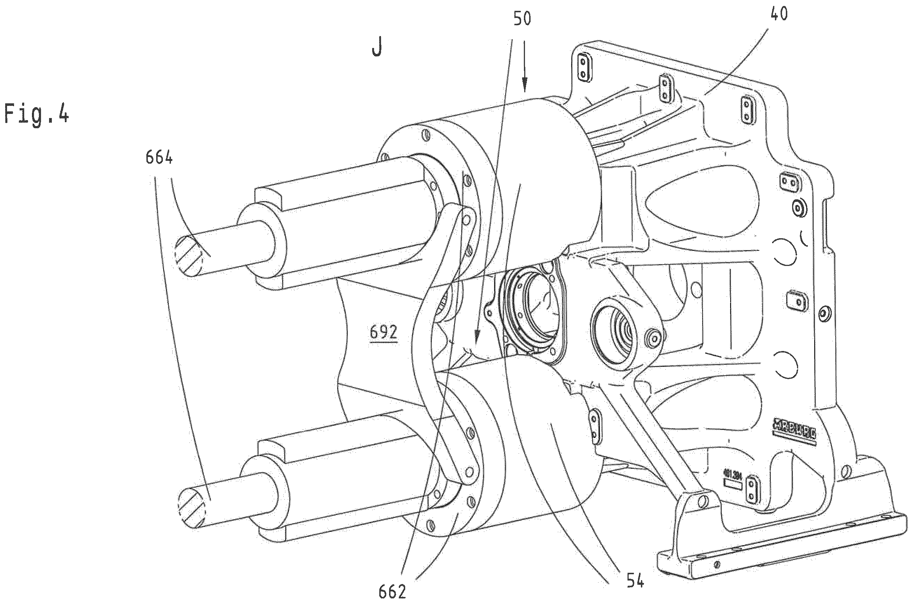

In Fig. 3, insbesondere Ausschnitt G und in Ansicht H, ist zu sehen, wie die nicht rotierende Spindelmutter 662 mit dem Kolben 52 verbunden und gegen ein Verdrehen geschützt ist. Eine zumindest teilweise Integration der nicht rotierenden Spindelmutter 662 in den Kolben 52 oder den Zylinder 54 reduziert die Baulänge der Formschließeinheit 10. Der Verdrehschutz kann z. B. dadurch erreicht werden, dass zumindest ein Teil einer äußeren Form der Spindelmutter 662 als Polygon, beispielsweise wie in der Fig. 3 als Sechskant, ausgeführt ist. Die Spindelmutter 662 bildet zumindest einen Teil des Kolbens 52 der Hydraulikeinheit 50, der in den Zylinder 54 der Hydraulikeinheit 50 eintaucht, wobei auch zumindest ein Teil einer inneren Form des Zylinders 54 als Polygon, beispielsweise wie in Fig. 3 als Sechskant, ausgeführt ist. Ein Verdrehschutz kann auch dadurch erreicht werden, dass zumindest zwei translatorisch bewegliche Spindelmuttern 662 mittels einer Traverse 692 miteinander gegenseitig verbunden werden, wie in Fig. 3 durch den Sichtpfeil J bzw. in Fig. 4 darstellt ist. Dies verringert in vorteilhafter Weise die Anzahl der notwendigen Bauteile und die Baulänge der Formschließeinheit 10. Als Verdrehschutz kommen auch noch weitere technische Ausgestaltungen wie z. B. Führungsstangen, Stifte oder Nuten in Betracht.

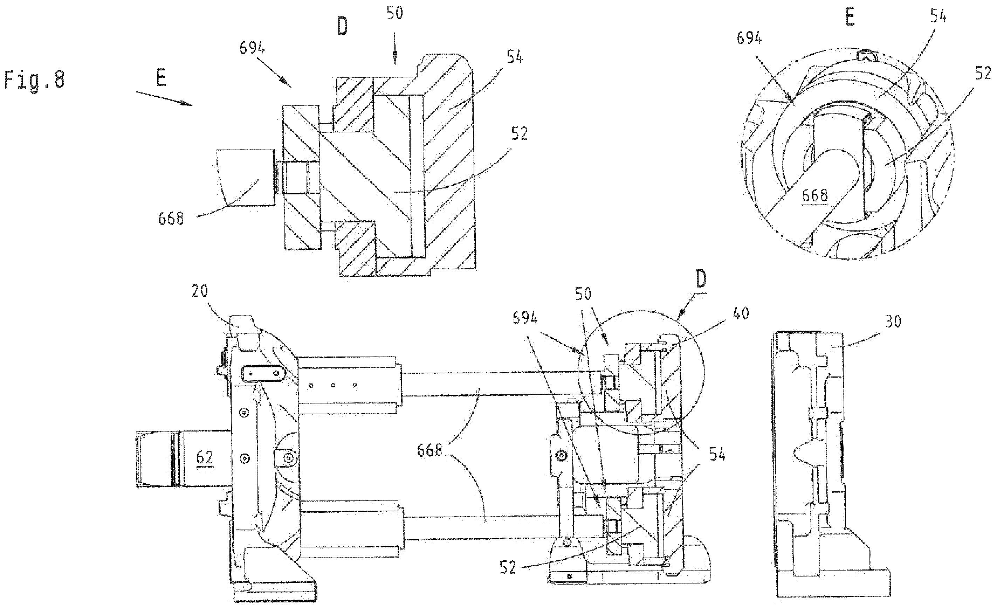

Die Linearbewegungseinheiten 66 können aber auch jeweils eine rotierende Spindelmutter 666 und eine nicht rotierende Gewindespindel 668 aufweisen, wie in Fig. 7, 8, 9, 13 und 14 abgebildet. Dadurch kann, wie oben bereits beschrieben, vorteilhaft die Verteilung der Masse innerhalb der Formschließeinheit 10 beeinflusst werden. In Abhängigkeit von der Anordnung des Getriebes 64, der Rückdrehsicherung 68 und des Motors 62 an der Abstützplatte 20 oder dem beweglichen Formträger 40 kann sowohl die nicht rotierende Gewindespindel 668 als auch die rotierende Spindelmutter 666 entweder direkt an dem beweglichen Formträger 40 oder der Abstützplatte 20 angeordnet sein. Wenn die nicht rotierende Gewindespindel 668 translatorisch beweglich und rotatorisch unbeweglich mit der Hydraulikeinheit 50 verbunden ist, verhindert dies vorteilhaft beim Druckaufbau der Hydraulikeinheiten 50 ein unbeabsichtigtes Rückdrehen der Gewindespindeln 668. In diesem Fall kann die nicht rotierenden Gewindespindel 668 auch verdrehsicher mit dem Kolben 52 oder dem Zylinder 54 der Hydraulikeinheit 50 ausgeführt sein, wobei die nicht rotierende Gewindespindel 668 zumindest teilweise in den Kolben 52 oder den Zylinder 54 integriert sein kann. In Fig. 8, insbesondere Ausschnitt D und in der Ansicht E, ist zu sehen, wie die nicht rotierenden Gewindespindel 668 mit dem Kolben 52 verbunden und über eine entsprechende Verdrehsicherung 694 gegen ein Verdrehen geschützt ist. Als Verdrehsicherung kommen auch hier die dem Fachmann bekannten technisch erdenklichen Lösungen zum Einsatz kommen, wie z.B. Führungsstangen, Bolzen, Konturzüge oder dergleichen.

Auch durch diese Maßnahme wird, wie bereits oben beschrieben, die Baulänge der Formschließeinheit 10 reduziert. Bei damit rotierender Spindelmutter und feststehender Gewindespindel können vorteilhaft die Hydraulikkomponenten in ihrer Dimensionierung minimiert werden, da für den Kraftaufbau die Kolbenseite zum Einsatz kommt (Fig. 8, Ausschnitt D - die Fläche zwischen Kolben 52 und beweglichem Formträger 54) im Gegensatz zu einer Lösung mit rotierender Gewindespindel. Dort kommt für den Kraftaufbau nur eine Kolbenstangenseite zum Einsatz die aufgrund der durchtauchenden Gewindespindel eine größere Dimensionierung erfordert (Fig 3. Ausschnitt G - Kreisringfläche zwischen Kolben 52 und beweglichem Formträger 54)

Der Vorteil einer rotierenden Spindelmutter 666 und einer nicht rotierenden Gewindespindel 668 liegt insbesondere darin, dass die Gewindespindel 668 im Kolbenbereich vorne nicht durch den Kolben 52 durchtauchen muss und somit der Kolben 52 kleiner ausgeführt werden kann. Ein weiterer Vorteil liegt außerdem darin, dass kein Schmierstoff über die Drehbewegung der Gewindespindel 668 abgeschleudert wird und die Krafteinleitungspunkte aufgrund der kleineren Kolbenfläche etwas nach innen geschoben werden können.

Vorteilhaft kann eine Anpassung der Formschließeinheit 10 an räumliche oder funktionale Vorgaben dadurch erreicht werden, dass der Motor 62 auf einer Seite der Abstützplatte 20 oder des beweglichen Formträgers 40 angeordnet sein kann und das Getriebe 64 sowie die Rückdrehsicherung 68 auf der anderen Seite. Fig. 9 bis 14 zeigen einige der Anordnungsmöglichkeiten, bei denen der Motor 62, das Getriebe 64 und die Rückdrehsicherung 68 an der Abstützplatte 20 angeordnet sind. Denkbar ist auch eine Rückdrehsicherung 68, die gemäß Fig. 9 als Magnetbremse oder schaltbarer Freilauf dargestellt ist.

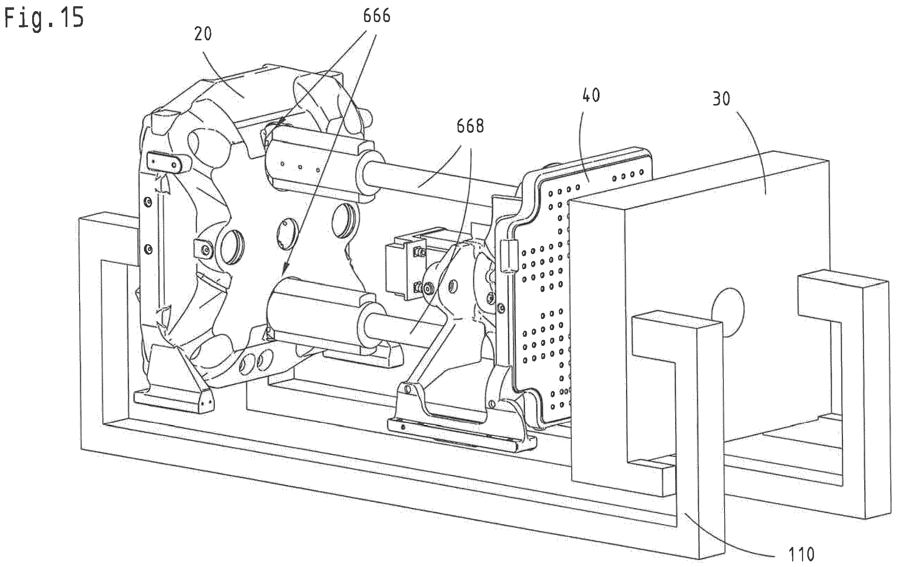

Wie in Fig. 15 abgebildet, kann bei der Formschließeinheit 10 auch vollständig auf die Verwendung von Holmen verzichtet werden. In diesem Fall kann die Kraftübertragung zwischen der Abstützplatte 20 und dem nicht beweglichen Formträger 30 holmlos über einen C-förmigen Bügel 110 realisiert werden, der auch in den Maschinenständer 120 integriert sein kann.

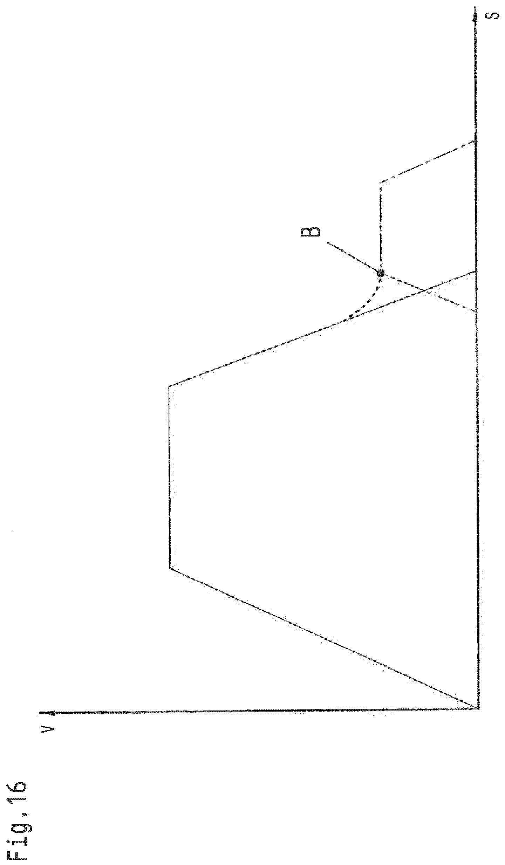

Fig. 16 zeigt ein Diagramm der Geschwindigkeit V des beweglichen Formträgers 40 über dem Weg der Formschließbewegung, wobei im Diagramm auf der rechten Seite der Formschluss erreicht wird, in dem der bewegliche Formträger 40 am nicht beweglichen Formträger 30 bei der Geschwindigkeit V = 0 anliegt.

Erfindungsgemäß wird eine vorzugsweise elektrische Fahrbewegung, ausgeführt mittels der mindestens zwei Linearbewegungseinheiten 66, mit einem hydraulischem Hochdruck zur Aufbringung der Schließkraft am Ende des Formschlusses gepaart, welcher durch die mindestens zwei Hydraulikeinheiten 50 aufgebracht wird. Die Konstruktion in Verbindung mit der Rückdrehsicherung 68 gestattet dabei auch die Verwendung von Reibbremsen (Kegelhülse, Bremsscheibe, Lammellenbremse...). Dadurch wird es möglich, bei einer derartigen Hybridlösung den beweglichen Formträger 40 in einem kontinuierlichen Bewegungsprofil zu bewegen, wie dies in Fig. 16 gezeigt ist.

Die Linien haben dabei folgende Bedeutung:
- Der durchgängige Linienzug (in Fig. 16 links) zeigt die Fahrbewegung des beweglichen Formträgers 40, die durch die Linearbewegungseinheiten 66 bewirkt ist.
- Der Strichpunkt-Linienzug (in Fig. 16 rechts) zeigt die Fahrbewegung des beweglichen Formträgers 40, die durch die Hydraulikeinheiten 50 bewirkt ist.
- Die gestrichelte Linie in der Mitte zeigt die überlagerte Fahrbewegung von Hydraulikeinheiten 50 und Linearbewegungseinheiten 66.
- Der Punkt B zeigt den Betätigungspunkt der Bremse

Gemäß dem Diagramm wird zunächst der bewegliche Formträger 40 mittels der Linearbewegungseinheiten 66 bis zu einem Punkt bewegt, kurz bevor die Formteile der Spritzgießform geschlossen sind. Dann wird die weitere Bewegung an die Hydraulikeinheiten 50 übergeben bei gleichzeitiger Betätigung der Bremse am Punkt B, um das Rückdrehverhalten zu eliminieren. Deutlich erkennbar ist, dass eine kontinuierliche Bewegung des beweglichen Formträgers 40 möglich ist.

### Bezugszeichenliste

- 10: Formschließeinheit
- 20: Abstützplatte
- 30: nicht beweglicher Formträger
- 35: erstes Formteil
- 40: beweglicher Formträger
- 45: weiteres Formteil
- 50: Hydraulikeinheit
- 52: Kolben
- 54: Zylinder
- 60: Antrieb
- 62: Motor
- 64: Getriebe
- 66: Linearbewegungseinheiten
- 662: nicht rotierende Spindelmutter
- 664: rotierende Gewindespindel
- 666: rotierende Spindelmutter
- 668: nicht rotierende Gewindespindel
- 68: Rückdrehsicherung
- 692: Traverse
- 694: Verdrehsicherung
- 100: Maschine zur Verarbeitung von Kunststoffen
- 110: C-förmiger Bügel
- 120: Maschinenständer
- 125: Linearführung
- 130: Spritzgießeinheit
- 140: Holme
- B: Bremspunkt

## Patentansprüche

1. Formschließeinheit (10) für eine Maschine (100) zur Verarbeitung von Kunststoffen und anderen plastifizierbaren Materialien, insbesondere eine Spritzgießmaschine, aufweisend eine Abstützplatte (20), einen nicht beweglichen Formträger (30), der ein erstes Formteil (35) trägt, einen beweglichen Formträger (40), der ein weiteres Formteil (45) trägt, mindestens eine Hydraulikeinheit (50) mit einem Kolben/Zylinder-Paar (52, 54) und einen Antrieb (60) umfassend einen Motor (62), ein Getriebe (64), mindestens eine Linearbewegungseinheit (66) und mindestens eine Rückdrehsicherung (68), wobei der Antrieb (60) und/oder die Hydraulikeinheit (50) eingerichtet sind, den beweglichen Formträger (40) zu bewegen, und die Hydraulikeinheit (50) eingerichtet ist, wenigstens einen Druck auf den beweglichen Formträger (40) aufzubringen,
wobei der Motor (62) und das Getriebe (64) an der Abstützplatte (20) oder dem beweglichen Formträger (40) angeordnet sind,
wobei mindestens eine Linearbewegungseinheit (66) zwischen der Abstützplatte (20) und dem beweglichen Formträger (40) angeordnet und mit dem Getriebe (64) sowie dem Motor (62) verbunden ist, wobei die mindestens eine Linearbewegungseinheit (66) mit einer Hydraulikeinheit (50) verbunden ist, die mit der Abstützplatte (20) oder dem beweglichen Formträger (40) verbunden ist,
wobei die mindestens eine Linearbewegungseinheit (66) eingerichtet ist, den nicht beweglichen Formträger (30) und den beweglichen Formträger (40) wahlweise in einen Zustand zu bringen, in dem die Formteile (35,45) einen definierten minimalen Abstand zueinander aufweisen oder einen größeren Abstand aufweisen, und
wobei die Hydraulikeinheit (50) eingerichtet ist, den beweglichen Formträger (40), in dem Zustand, in dem die Formteile (35, 45) den definierten minimalen Abstand zueinander aufweisen, mit einem Druck zu beaufschlagen, wobei der Antrieb (60) gleichzeitig durch die Rückdrehsicherung (68) gesichert ist,
**dadurch gekennzeichnet,**
**dass** mindestens zwei Linearbewegungseinheiten (66) zwischen der Abstützplatte (20) und dem beweglichen Formträger (40) angeordnet und mit dem Getriebe (64) sowie dem Motor (62) verbunden sind, wobei jede der Linearbewegungseinheiten (66) mit jeweils einer von mehreren Hydraulikeinheiten (50) verbunden ist, die mit der Abstützplatte (20) oder dem beweglichen Formträger (40) verbunden sind,
**dass** die Linearbewegungseinheiten (66) eingerichtet sind, den nicht beweglichen Formträger (30) und den beweglichen Formträger (40) wahlweise in einen Zustand zu bringen, in dem die Formteile (35,45) einen definierten minimalen Abstand zueinander aufweisen oder einen größeren Abstand aufweisen,
**dass** die Hydraulikeinheiten (50) eingerichtet sind, den beweglichen Formträger (40), in dem Zustand, in dem die Formteile (35, 45) den definierten minimalen Abstand zueinander aufweisen, mit einem Druck zu beaufschlagen.

2. Formschließeinheit (10) nach Anspruch 1, **dadurch gekennzeichnet, dass** das Getriebe (64) ein Zahnradgetriebe, insbesondere ein Stirnradgetriebe, oder ein Riemengetriebe ist, und dass das Getriebe mit der Rückdrehsicherung (68) verbunden ist, wobei zumindest das Getriebe (64) wenigstens teilweise in die Abstützplatte (20) oder den beweglichen Formträger (40) integrierbar ist.

3. Formschließeinheit (10) nach Anspruch 1 oder 2, **dadurch gekennzeichnet, dass** die Rückdrehsicherung (68) eine Bremse oder Arretierung, insbesondere eine Backenbremse, eine Scheibenbremse, eine Lamellenbremse, ein schaltbarer Freilauf, eine Schiebehülse, eine Sperrklinke oder eine konisch kegelige Spann- oder Reibhülse ist.

4. Formschließeinheit (10) nach Anspruch 3, **dadurch gekennzeichnet, dass** die Bremse dazu eingerichtet ist und so betätigbar ist, dass sich ein stetiger Übergang einer Bewegung des beweglichen Formträgers (40) mittels der Linearbewegungseinheiten (66) und einer Bewegung des beweglichen Formträgers (40) mittels der Hydraulikeinheiten (50) ergibt.

5. Formschließeinheit (10) nach einem der vorhergehenden Ansprüche, **dadurch gekennzeichnet, dass** die Rückdrehsicherung (68) unter Reduzierung der für die Rückdrehsicherung erforderlichen Kraft nahe dem antriebsseitigen Ende des Getriebes (64) angreift.

6. Formschließeinheit (10) nach einem der vorhergehenden Ansprüche, **dadurch gekennzeichnet, dass** die Hydraulikeinheiten (50) jeweils ein Kolben/Zylinder-Paar (52, 54) mit kurzem Kolbenhub umfassen, wobei der Kolben (52) oder der Zylinder (54) zumindest teilweise in die Abstützplatte (20) oder den beweglichen Formträger (40) integrierbar ist.

7. Formschließeinheit (10) nach einem der vorhergehenden Ansprüche, **dadurch gekennzeichnet, dass** die Linearbewegungseinheiten (66) jeweils eine nicht rotierende Spindelmutter (662) und eine rotierende Gewindespindel (664) aufweisen, wobei die nicht rotierende Spindelmutter (662) translatorisch beweglich und rotatorisch unbeweglich mit der Hydraulikeinheit (50) verbunden ist.

8. Formschließeinheit (10) nach Anspruch 7, **dadurch gekennzeichnet, dass** die die nicht rotierende Spindelmutter (662) verdrehsicher mit dem Kolben (52) oder dem Zylinder (54) der Hydraulikeinheit (50) ausgeführt ist, wobei die nicht rotierende Spindelmutter (662) zumindest teilweise in den Kolben (52) oder den Zylinder (54) integriert sein kann.

9. Formschließeinheit (10) nach einem der Ansprüche 1 bis 6, **dadurch gekennzeichnet, dass** die Linearbewegungseinheiten (66) jeweils eine rotierende Spindelmutter (666) und eine nicht rotierende Gewindespindel (668) aufweisen, wobei die nicht rotierende Gewindespindel (668) translatorisch beweglich und rotatorisch unbeweglich mit der Hydraulikeinheit (50) verbunden ist.

10. Formschließeinheit (10) nach Anspruch 9, **dadurch gekennzeichnet, dass** die nicht rotierende Gewindespindel (668) verdrehsicher mit dem Kolben (52) oder dem Zylinder (54) der Hydraulikeinheit (50) ausgeführt ist, wobei die nicht rotierende Gewindespindel (668) zumindest teilweise in den Kolben (52) oder den Zylinder (54) integriert sein kann.

11. Formschließeinheit (10) nach einem der vorhergehenden Ansprüche, **dadurch gekennzeichnet, dass** der Motor (62) auf einer Seite der Abstützplatte (20) oder des beweglichen Formträgers (40) angeordnet ist und das Getriebe (64) sowie die Rückdrehsicherung (68) auf der anderen Seite.

12. Maschine (100) zur Verarbeitung von Kunststoffen und anderen plastifizierbaren Materialien, insbesondere eine Spritzgießmaschine, **dadurch gekennzeichnet, dass** sie eine Formschließeinheit (10) nach einem der Ansprüche 1 bis 11 aufweist.

13. Verfahren zum Betreiben einer Formschließeinheit (10) einer Maschine (100) zur Verarbeitung von Kunststoffen und anderen plastifizierbaren Materialien, insbesondere einer Spritzgießmaschine, aufweisend eine Abstützplatte (20), einen nicht beweglichen Formträger (30), der ein erstes Formteil (35) trägt, einen beweglichen Formträger (40), der ein weiteres Formteil (45) trägt, mindestens eine Hydraulikeinheit (50) und einen Antrieb (60) umfassend einen Motor (62), ein Getriebe (64), mindestens eine Linearbewegungseinheit (66) und mindestens eine Rückdrehsicherung (68), wobei der Antrieb (60) und/oder die Hydraulikeinheit (50) den beweglichen Formträger (40) bewegen und die Hydraulikeinheit (50) wenigstens einen Druck auf den beweglichen Formträger (40) aufbringt,
wobei der Motor (62) und das Getriebe (64) an der Abstützplatte (20) oder dem beweglichen Formträger (40) angeordnet sind,
wobei die mindestens eine Linearbewegungseinheit (66) zwischen der Abstützplatte (20) und dem beweglichen Formträger (40) angeordnet und mit dem Getriebe (64) sowie dem Motor (62) verbunden ist, wobei die mindestens eine Linearbewegungseinheit (66) mit einer Hydraulikeinheit (50) verbunden ist, die mit der Abstützplatte (20) oder dem beweglichen Formträger (40) verbunden ist,
wobei die mindestens eine Linearbewegungseinheit (66) den nicht beweglichen Formträger (30) und den beweglichen Formträger (40) wahlweise in einen Zustand bringt, in dem die Formteile (35, 45) einen definierten minimalen Abstand zueinander aufweisen oder einen größeren Abstand aufweisen,
wobei die Hydraulikeinheit (50) den beweglichen Formträger (40), in dem Zustand in dem die Formteile (35, 45) den definierten minimalen Abstand zueinander aufweisen, mit einem Druck beaufschlagt, wobei der Antrieb (60) gleichzeitig durch die Rückdrehsicherung (68) gesichert wird,
**dadurch gekennzeichnet,**
**dass** mindestens zwei Linearbewegungseinheiten (66) zwischen der Abstützplatte (20) und dem beweglichen Formträger (40) angeordnet und mit dem Getriebe (64) sowie dem Motor (62) verbunden sind, wobei jede der Linearbewegungseinheiten (66) mit jeweils einer der Hydraulikeinheiten (50) verbunden ist, die mit der Abstützplatte (20) oder dem beweglichen Formträger (40) verbunden sind,
**dass** die Linearbewegungseinheiten (66) den nicht beweglichen Formträger (30) und den beweglichen Formträger (40) wahlweise in einen Zustand bringen, in dem die Formteile (35,45) einen definierten minimalen Abstand zueinander aufweisen oder einen größeren Abstand aufweisen,
**dass** die Hydraulikeinheiten (50) den beweglichen Formträger (40), in dem Zustand, in dem die Formteile (35, 45) den definierten minimalen Abstand zueinander aufweisen, mit einem Druck beaufschlagen.

14. Verfahren nach Anspruch 13, **dadurch gekennzeichnet, dass** die Rückdrehsicherung (68) als Bremse den beweglichen Formträger (40) für einen stetigen Übergang einer mittels der Linearbewegungseinheiten (66) hervorgerufenen Bewegung des beweglichen Formträgers (40) und einer mittels der Hydraulikeinheiten (50) hervorgerufenen Bewegung des beweglichen Formträgers (40) bremst.
